# EUROPÄISCHE PATENTSCHRIFT

(11) **EP 2 440 488 B1**
(45) Veröffentlichungstag und Bekanntmachung des Hinweises auf die Patenterteilung: **25.02.2015**
(21) Anmeldenummer: 10722133.5
(22) Anmeldetag: 08.06.2010
(51) Int. Cl.: B60S 5/06, B60L 11/18, B66F 9/06, B60L 15/38

(54) **SYSTEM ZUM WECHSELN EINER BATTERIE EINES FLURGEBUNDENEN TRANSPORTFAHRZEUGES, INSBESONDERE EINES FAHRERLOSEN SCHWERLAST-TRANSPORTFAHRZEUGES FÜR ISO-CONTAINER**
SYSTEM FOR REPLACING A BATTERY OF A GROUND TRANSPORTATION VEHICLE, PARTICULARLY OF AN UNMANNED HEAVY-DUTY TRANSPORTATION VEHICLE FOR ISO CONTAINERS
SYSTÈME PERMETTANT DE CHANGER UNE BATTERIE D'UN VÉHICULE DE TRANSPORT DE CHARGES LOURDES DE TYPE VÉHICULE DE MANUTENTION, EN PARTICULIER D'UN VÉHICULE DE TRANSPORT DE CHARGES LOURDES SANS CHAUFFEUR DESTINÉ À DES CONTENEURS ISO

(30) Priorität: 10.06.2009 DE 102009025052
(43) Veröffentlichungstag der Anmeldung: 18.04.2012
(73) Patentinhaber: Terex MHPS GmbH, 40597 Düsseldorf (DE)
(72) Erfinder: FRANZEN, Hermann, 41238 Mönchengladbach (DE); WIESCHEMANN, Armin, 46119 Oberhausen (DE); HEGEWALD, Mike, 40597 Düsseldorf (DE); MOUTSOKAPAS, Jannis, 40789 Monheim (DE)
(74) Vertreter: Moser Götze & Partner Patentanwälte mbB
(86) Internationale Anmeldenummer: PCT/EP2010/058023
(87) Internationale Veröffentlichungsnummer: WO 2010/142688

(56) Entgegenhaltungen:
- DE-A1- 2 359 054
- JP-A- 5 294 147
- JP-A- 62 205 819
- JP-A- 2000 302 206

## Beschreibung

Die Erfindung betrifft ein System zum Wechseln einer Batterie eines flurgebundenen Transportfahrzeuges mit Lagerplätzen für Batterien, mit mindestens einem flurgebundenen Transportfahrzeug mit einem Aufnahmeplatz für eine auswechselbare Batterie und mit mindestens einer Be- und Entladevorrichtung zum Transport der Batterien zwischen den Lagerplätzen und dem Aufnahmeplatz eines auf einem Wechselplatz ruhenden Transportfahrzeuges, wobei die Batterie für ein Ein- und Auslagern der Batterie in den Lagerplätzen beziehungsweise in den Aufnahmeplätzen in Hub- und Senkrichtung bewegbar ist.

Aus dem Patent DE 42 03 778 C2 ist ein fahrerloses Flurfahrzeug mit einem darauf angeordneten Manipulator bekannt. Mittels des Flurfahrzeuges kann der Manipulator selbsttätig zwischen verschiedenen Arbeitsstationen verfahren werden, um dort Montageaufgaben auszuführen. Das Flurfahrzeug wird über eine auswechselbare Nickel-Cadmium-Batterie angetrieben. Die Batterie kann selbsttätig an einer Wechselstation ausgetauscht werden, wenn sie aufgeladen werden muss. Hierfür ist in einem Fahrzeugrahmen des Flurfahrzeugs ein Batterieraum vorgesehen, in dem quer zur Längsrichtung des Flurfahrzeugs ausgerichtete Führungsschienen angeordnet sind. Die Batterie ist an ihrer Unterseite mit Rollen versehen, die in den Führungsschienen abrollen. Um die Batterie während des Betriebs des Flurfahrzeuges gegen Bewegungen entlang der Führungsschienen zu sichern, ist an dem Fahrzeugrahmen ein in Richtung der Batterie federnd vorgespannter Stift vorgesehen, der während des Betriebs des Flurfahrzeuges in eine Aussparung in der Batterie eingreift. Für einen Wechsel der Batterie kann der Stift hydraulisch abgesenkt werden. Die somit frei gegebene Batterie kann über eine Wechselvorrichtung entlang der Führungsschienen aus dem Fahrzeugrahmen heraus gezogen werden. Für den Wechselvorgang fährt das Flurfahrzeug selbsttätig an eine Wechselstation. Nach erfolgter Entriegelung der Batterie fährt ausgehend von der Wechselstation ein Greifer in Richtung der Batterie und ergreift dort einen an der Außenseite der Batterie angeordneten Vorsprung. Anschließend zieht der Greifer die Batterie aus dem Flurfahrzeug heraus und die Rollen der Batterie verlassen die Führungsschienen des Flurfahrzeugs und gelangen auf in Verlängerung der Führungsschienen angeordnete Fahrschienen der Wechselstation. Im Bereich der Wechselstation wird die Batterie dann automatisch kontaktiert und geladen. Der zuvor beschriebenen ersten Wechselstation ist gegenüberliegend eine zweite Wechselstation angeordnet, von der eine dort bereits geladene Reserve-Batterie von der anderen Seite her in den Batterieraum eingeschoben wird. Die Wechselzeit wird somit verkürzt, so dass das Fahrzeug mit nur einer Reserve-Batterie nahezu kontinuierlich betrieben werden kann.

Des Weiteren ist aus der deutschen Patentanmeldung DE 10 2007 039 778 A1 bereits ein fahrerloses und flurgebundenes Schwerlast-Transportfahrzeug für ISO-Container bekannt. Das Schwerlast-Transportfahrzeug weist einen Fahrzeugrahmen auf, auf dem mindestens eine Hubplattform angeordnet ist, die aus einer abgesenkten Transportstellung über mindestens einen Hubantrieb in eine angehobene Übergabestellung anhebbar beziehungsweise umgekehrt absenkbar ist. Üblicher Weise werden derartige Schwerlast-Transportfahrzeuge über einen Dieselmotor angetrieben.

Außerdem ist aus der japanischen Offenlegungsschrift JP 05 294 147 A bereits ein System zum Wechseln einer Batterie eines flurgebundenen Transportfahrzeuges bekannt. Das System besteht neben den flurgebundenen Transportfahrzeugen mit einer auswechselbaren Batterie aus innerhalb eines Regals angeordneten Lagerplätzen für wieder aufzuladende Batterien. Die Batterien werden zwischen den flurgebundenen Transportfahrzeugen und den Lagerplätzen von einer automatischen Be- und Entladevorrichtung transportiert. Innerhalb der Transportfahrzeuge und der Regale werden die Batterien automatisch elektrisch an- und abgekoppelt.

Die japanische Offenlegungsschrift JP 62 205819 A offenbart ein System gemäß dem Oberbegriff des Anspruchs 1 und die Verwendung eines Regalbediengerätes, um Batterien von fahrerlosen Transportfahrzeugen in ein Hochregallager mit Ladestationen in Form von Regalen zu transportieren. Das fahrerlose Transportfahrzeug weist im Bereich eines Aufnahmeplatzes für eine Batterie und in den Regalfächern im Bereich eines Lagerplatzes für die Batterie als kleine Dreiecke dargestellte Elemente auf, die nicht näher bezeichnet sind und deren technische Funktion nicht offenbart wird.

Die deutsche Offenlegungsschrift DE 23 59 054 A1 offenbart ein über eine auswechselbare Batterie betriebenes Fahrzeug, bei dem die Batterie unterhalb des Fahrzeugs ohne Ausrichtungsarbeiten aufgehängt werden kann.

Ferner offenbart die japanische Offenlegungsschrift JP 2000 302206 A ein Regalbediengerät für das Be- und Entladen eines Regals mit wiederaufladbaren Batterien, das hierfür einen Auslegerarm umfasst. Auf dem Auslegerarm sind zwei kegelförmige Zentrier- oder Kontaktelemente vorgesehen.

Ausgehend von diesem Stand der Technik liegt der vorliegenden Erfindung die Aufgabe zugrunde, ein verbessertes System zum Wechseln einer Batterie eines flurgebundenen Transportfahrzeuges, insbesondere eines fahrerlosen Schwerlast-Transportfahrzeuges für ISO-Container, zu schaffen.

Diese Aufgabe wird durch ein System zum Wechseln einer Batterie eines flurgebundenes Transportfahrzeuges mit den Merkmalen des Anspruchs 1 gelöst. Vorteilhafte Ausgestaltungen der Erfindung sind in den Unteransprüchen 2 bis 14 angegeben.

Erfindungsgemäß wird ein verbessertes System zum Wechseln einer Batterie eines flurgebundenen Transportfahrzeuges mit Lagerplätzen für Batterien, mit mindestens einem flurgebundenen Transportfahrzeug mit einem Aufnahmeplatz für eine auswechselbare Batterie und mit mindestens einer Be- und Entladevorrichtung zum Transport der Batterien zwischen den Lagerplätzen und dem Aufnahmeplatz eines auf einem Wechselplatz ruhenden Transportfahrzeuges, wobei die Batterie für ein Ein- und Auslagern der Batterie in den Lagerplätzen beziehungsweise in den Aufnahmeplätzen in Hub- und Senkrichtung bewegbar ist, dadurch erreicht, dass das Transportfahrzeug ein fahrerloses Schwerlast-Transportfahrzeug für ISO-Container ist, die Batterie als Bleibatterie ausgebildet ist und ein Gewicht von mindestens 6t, vorzugsweise 8t bis 9t, hat, dem Lagerplatz beziehungsweise dem Aufnahmeplatz derart Zentrierelemente zugeordnet sind, dass die Batterie in Antwort auf die Senkbewegung der Be- und Entladevorrichtung über die Zentrierelemente relativ zu dem Lagerplatz beziehungsweise dem Aufnahmeplatz ausgerichtet wird. Hierdurch wird das automatische Ein- und Auslagern erleichtert. Ein besonderer Vorteil liegt darin, dass in Bezug auf den Batteriewechsel und das Ausrichten der Batterie zu dem Aufnahmeplatz beziehungsweise dem Lagerplatz das Transportfahrzeug beziehungsweise das Regal passiv ausgestaltet ist und jegliche Manipulationsbewegungen von dem Verteilfahrzeug ausgehen. Auch ist hierdurch eine besonders einfache Befestigung der Batterie in den Lagerplätzen und dem Transportfahrzeug und somit eine schnelle Ein- und Auslagerung sowie eine einfache Ausrichtung der Batterie möglich.

In besonders vorteilhafter Ausgestaltung ist vorgesehen, dass die Batterie derart ausgebildet ist, dass diese von der Be- und Entladevorrichtung in den Lagerplatz beziehungsweise den Aufnahmeplatz auf- und abhängbar sind. Die Batterie lässt sich somit einfach handhaben.

Hierbei ist als konstruktiv vorteilhafte Ausgestaltung vorgesehen, dass an der Batterie seitlich zu beiden Seiten hervor ragende Auflageelemente und in dem Lagerplatz Tragschienen und dem Aufnahmeplatz Auflageschienen angeordnet sind, auf den die Auflageelemente einer in dem Lagerplatz beziehungsweise den Aufnahmeplatz ruhenden Batterie aufliegen. Die Batterien, der Aufnahmeplatz und die Lagerplätze sind somit mechanisch einfach ohne bewegbare Teile ausgestattet.

Angesichts des hohen Gewichts der Batterie wird das Zentrieren dadurch erleichtert, dass die Be- und Entladevorrichtung derart ausgebildet ist, dass die Batterie zum Erleichtern des Zentrierens während der Senkbewegung der Be- und Entladevorrichtung und bei im Eingriff befindlichen Zentrierelementen horizontal bewegbar ist.

Das System zum Wechseln der Batterien ist insgesamt derart ausgestaltet, dass die mechanische Komplexität an den Transportfahrzeugen und den Lagerplätzen in dem Regal sehr gering gehalten wird. So werden weder bewegte mechanische Komponenten wie beispielweise Rollen, noch aktive Aktoren wie beispielsweise Hydraulikzylinder oder Elektromotoren an den Lagerplätzen oder dem Transportfahrzeug benötigt. Alle erforderlichen Bewegungen werden von dem Verteilfahrzeug mit der Be- und Entladevorrichtung durchgeführt. Da die Zahl der Be- und Entladevorrichtung im Vergleich zu der Zahl der Fahrzeuge und der Lagerplätzen gering ist, können der technische Aufwand und die Herstellkosten des Gesamtsystems reduziert werden. Weiterhin wird die Zuverlässigkeit des Systems durch die reduzierte Komplexität erhöht.

Im Stand der Technik bekannte Traktionsbatterien weisen eine deutlich geringere Masse und Abmessungen auf, als die Batterien, die zum dauerhaften Betrieb von Schwerlast-Fahrzeugen benötigt werden. Das beschriebene System zum Wechseln der Fahrzeugbatterien ist speziell für die Handhabung und Lagerung der großen Batterieabmessunge und hohen Batteriemassen ausgelegt. Die Batteriewechselstation ermöglicht einen schnellen und automatisierten Austausch von Batterien auf einem sehr kompakten Grundriss. Die Wechselplätze können flexibel relativ zu den Lagerplätzen angeordnet werden. Hierdurch kann die Wechselstation ohne großen Planungsaufwand in bestehende Infrastrukturen integriert werden und die Gestaltungsfreiheit bei der Planung wird erhöht. Der schnelle Batteriewechsel ermöglicht einen umweltfreundlichen Betrieb der Transportfahrzeug ohne eine nennenswerte Reduktion der Leistungsfähigkeit.

Im Sinne der Erfindung wird unter einem Schwerlast-Transportfahrzeug ein Fahrzeug verstanden, das eine Zuladung von mindestens 15 t, vorzugsweise mindestens 20 t, transportieren kann. Als Lasten für die Schwerlast-Transportfahrzeuge kommen ISO-Container und Wechselbehälter in Frage. Beladene Wechselbehälter können in der Regel bis zu etwa 16t wiegen. ISO-Container wiegen im beladenen Zustand 200t bis 80 t. Der Transport von ISO-Containern wird bevorzugt. Unter ISO-Containern werden allgemein genormte Großbehälter mit genormten Aufnahmepunkten oder- ecken für Lastaufnahmemittel verstanden. Auch ein Schwerlast-Transportfahrzeug, das leer fährt oder einen leeren ISO-Container oder Wechselbehälter transportiert, soll unter diese Verständnis fallen, soweit dieses Fahrzeug eine Zuladung von mindestens 15 t, vorzugsweise mindestens 20 t, transportieren kann. Es kann auch vorkommen, dass derartige Schwerlast-Transportfahrzeuge in einem Mischbetrieb arbeiten, d.h. neben den ISO-Container oder Wechselbehältern auch andere Lasten wie Sattelauflieger, Wechselbrücken, Anhänger, Lastkraftwagen oder Zugmaschinen transportieren.

Durch die Automatisierung kann die Wechselstation optimal mit den automatisierten Fahrzeugen zusammenarbeiten. Der Batteriewechsel kann unabhängig von der Personalverfügbarkeit jederzeit erfolgen. Hierdurch kann das System sehr gut auf unerwartete Spitzenlasten reagieren.

Die Handhabungsgeschwindigkeit wird weiter dadurch erhöht, dass über die Bewegung der Batterie in Hub- und Senkrichtung die Batterie in den Lagerplätzen und dem Transportfahrzeug automatisch elektrisch trennbar beziehungsweise elektrisch kontaktierbar ist.

In konstruktiver Hinsicht ist besonders vorteilhaft, dass die Be- und Entladevorrichtung einen Auflagearm für die Batterie aufweist, der in Richtung des Fahrwegs des Verteilfahrzeuges gesehen seitlich in eine Ein- und Auslagerungsrichtung der Lagerplätze und in Richtung eines Wechselplatzes aus- beziehungsweise einfahrbar ist.

Für den Betrieb der Transportfahrzeuge besonders zuverlässig ist, dass die Batterie als Bleibatterie ausgebildet ist und in den Lagerplätzen eine Ladevorrichtung vorgesehen ist, die während des Ladevorganges die Batterie mit der optimalen Menge gereinigten Wassers versorgt.

Eine weitere Optimierung der Wechselzeit der Batterien wird dadurch erreicht, dass das Verteilfahrzeug im Automatikbetrieb arbeitet.

Eine hohe Verfügbarkeit der Transportfahrzeuge wird dadurch erreicht, dass eine Vielzahl von Lagerplätzen nebeneinander angeordnet sind, die Be- und Entladevorrichtung an einem Verteilfahrzeug angeordnet ist, das entlang der Lagerplätze und entlang eines Fahrweges verfahrbar ist und an den Fahrweg angrenzend mindestens ein Wechselplatz für das Transportfahrzeug angeordnet ist. Durch diese Kombination einer Vielzahl von Lagerplätzen für ein Aufladen und ein Zwischenlagerung der Batterien der Transportfahrzeuge mit mindestens einem Verteilfahrzeug zum Transportieren der auszutauschenden Batterien zwischen den Transportfahrzeugen und den Lagerplätzen kann erreicht werden, dass der Wechsel der Batterien der Transportfahrzeuge zügig abläuft und die Stillstandzeit der Transportfahrzeuge die bei einem Tankstopp für dieselbetriebene Transportfahrzeuge übliche Stillstandzeit nicht übersteigt. Das Verteilfahrzeug ist optimal geeignet, die Batterien zwischen dem Transportfahrzeug und den Lagerplätzen zu bewegen. Hieraus resultiert auch eine hohe Verfügbarkeit der Transportfahrzeuge.

Eine Platz sparende Version des Batteriewechselsystems ergibt sich, wenn mindestens ein Wechselplatz in Bezug auf den Fahrweg des Verteilfahrzeugs den Lagerplätzen gegenüberliegend angeordnet ist. Bei einer Vielzahl von Lagerplätzen nebeneinander kann dann ein Verteilfahrzeug auch mehrere Wechselplätze bedienen.

Eine weitere besonders Platz sparende Version des Batteriewechselsystems ergibt sich daraus, dass mindestens ein Wechselplatz angrenzend an den Fahrweg und in Verlängerung der Lagerplätze angeordnet ist. Das Batteriewechselsystem ist somit insgesamt sehr schmal ausgebildet.

Um die Ein- und Auslagerungskapazität des Batteriewechselsystems zu erhöhen, sind auch verschiedenste Anordnungen der Wechselplätze zu den Lagerplätzen und unterschiedliche Anzahlen von Verteilfahrzeugen möglich. Es kann mehr als ein Wechselplatz vorgesehen sein, der in Bezug auf den Fahrweg den Lagerplätzen gegenüberliegend angeordnet und/oder angrenzend an den Fahrweg und in Verlängerung der Lagerplätze angeordnet ist.

Eine weitere Verbesserung der Raumausnutzung wird dadurch erreicht, dass die Lagerplätze in einem Regal mit mehreren übereinander angeordneten Ebenen ausgebildet sind und das Verteilfahrzeug als Regalbediengerät ausgebildet ist.

Außerdem ist als bevorzugte Variante vorgesehen, dass im Bereich der Wechselplätze Sensoren angeordnet sind, mit denen die Position des Transportfahrzeuges relativ zu der Be- und Entladevorrichtung feststellbar ist, und die Ausrichtung der Be- und Entladevorrichtung zu dem Transportfahrzeug auf dem Wechselplatz anhand der ermittelten Position des Transportfahrzeuges korrigierbar ist. Somit ist gewährleistet, dass die Ausrichtung der Batterie über die Zentrierelemente zuverlässig funktioniert.

Nachfolgend wird die Erfindung anhand eines in einer Zeichnung dargestellten Ausführungsbeispiels näher erläutert. Es zeigen:
Figur 1 eine Draufsicht auf ein System zum Wechseln einer Batterie eines flurgebundenen und fahrerlosen Transportfahrzeuges für Container,
Figur 2 eine perspektivische Ansicht von Figur 1,
Figur 3 eine Vorderansicht des Regals von Figur 1,
Figur 4 eine Seitenansicht von Figur 3,
Figur 5 eine Seitenansicht von Figur 3, mit dem Verteilfahrzeug in einer anderen Stellung,
Figur 6 eine perspektivische Ansicht des Verteilfahrzeugs,
Figur 7 ein vergrößerte Ausschnittsansicht von Figur 3 aus dem Bereich des Verteilfahrzeugs und
Figur 8 eine Seitenansicht eines Transportfahrzeug gemäß Figur 3.

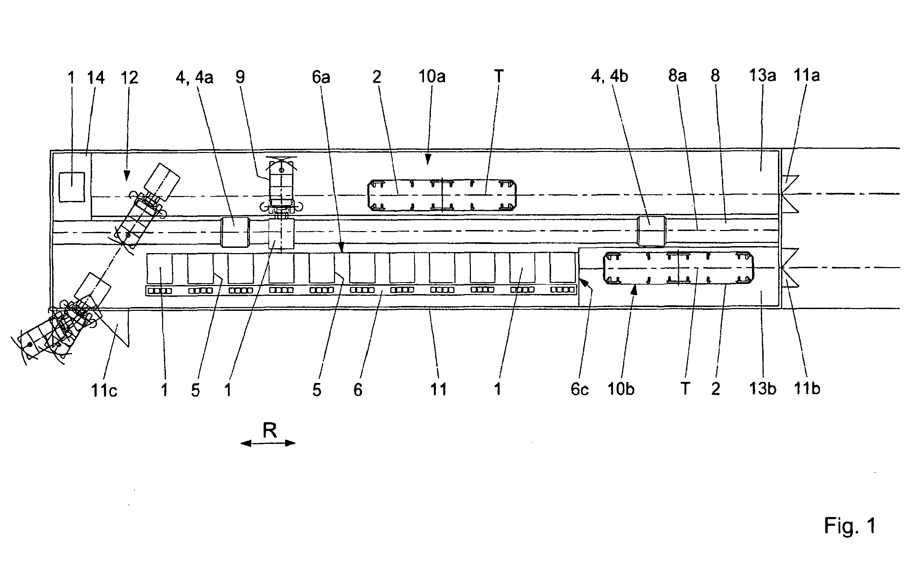

Die Figur 1 zeigt eine Draufsicht auf ein System zum Wechseln einer Batterie 1 eines flurgebundenen und fahrerlosen Transportfahrzeuges 2 für Container, vorzugsweise ISO-Container. Das Transportfahrzeug 2 nutzt als Energiequelle für seine nicht dargestellten Antriebe und Verbraucher die Batterie 1, die vorzugsweise als Bleibatterie ausgebildet ist. Die Batterie 1 hat etwa ein Gewicht von 6 bis 10 t, vorzugsweise 8 bis 9 t, und ermöglicht einen Betrieb des Transportfahrzeuges 1 von etwa 6 bis 8 Stunden. Über die Batterie 1 wird ein nicht dargestellter Elektromotor angetrieben, der wiederum eine Hydraulikpumpe antreibt, die auf die Einzelradfahrantriebe des Transportfahrzeuges 2, den Hubantrieb für eine Hubplattform 3 des Transportfahrzeuges 2 und etwaige weitere Verbraucher wirkt. Es ist auch ein elektrischer Fahrantrieb anstatt des elektro-hydraulischen Fahrantriebs möglich. Das Transportfahrzeug 2 kann auch ohne eine Hubplattform 3 für die Container ausgebildet sein. Dann werden die Container direkt auf dem Transportfahrzeug 2 beziehungsweise dessen Fahrzeugrahmen 2b abgestellt.

Neben dem Transportfahrzeug 2 besteht das System aus einem Verteilfahrzeug 4 und einer Vielzahl von Lagerplätzen 5 für Batterien 1 in einem Regal 6. Über das Verteilfahrzeug 4 werden bei Bedarf die nahezu entladenen Batterien 1 aus dem Transportfahrzeug 2 entladen und auf einem Lagerplatz 5 des Regals 6 abgestellt. Anschließend wird eine andere aufgeladene Batterie 1 aus einem Lagerplatz 5 des Regals 6 von dem Verteilfahrzeug 4 dem Transportfahrzeug 2 zugeführt. Hierfür weist das Verteilfahrzeug 4 eine teleskopartig arbeitende Be- und Entladevorrichtung 7 auf, die die Batterie 1 nach Art eines Gabelstaplers handhabt.

In dem vorliegenden Ausführungsbeispiel sind eine Vielzahl von Lagerplätzen 5 linear nebeneinander angeordnet und in mehreren Ebenen 6a übereinander in dem Regal 6 angeordnet. Entsprechender Weise weist das Regal 6 eine rechteckige Grundfläche auf mit zwei Längsseiten 6b und zwei Stirnseiten 6c. Entlang einer der beiden Längsseiten 6b verläuft ein Fahrweg 8 für das Verteilfahrzeug 4. Entsprechend der linearen Ausgestaltung des Regals 6 verläuft auch der Fahrweg 8 geradlinig. In dem Fahrweg 8 ist eine Schiene 8a eingelassen, so dass der Fahrweg 8 problemlos von anderen Fahrzeugen gekreuzt werden kann. Auf dieser Schiene 8a verfährt das Verteilfahrzeug 4 und kann so nach Art eines Regalbediengerätes mit seiner Be- und Entladevorrichtung 7 alle Lagerplätze 5 des Regals 6 erreichen.

Grundsätzlich ist es auch möglich, das Verteilfahrzeug 4 so auszubilden, das es nur in einer Ebene 6a arbeitet und somit die Lagerplätze 5 nur in einer einzigen Ebene 6a nebeneinander angeordnet sind.

In dem vorliegenden Ausführungsbeispiel sind ein erstes Verteilfahrzeug 4a und ein zweites Verteilfahrzeug 4b vorgesehen, um einerseits die Ein- und Auslagerungskapazität des Systems zu erhöhen und andererseits die Verfügbarkeit des Systems im Falle eines Ausfalls einer der beiden Verteilfahrzeuge 4a, 4b im Sinne einer Redundanz zu erhalten. Für den unwahrscheinlichen Fall, dass beide Verteilfahrzeuge 4a, 4b ausfallen, kann ein Gabelstapler 9 oder vergleichbares Fahrzeug in das System einfahren und die Batterien 1 können manuell gewechselt werden.

Des Weiteren ist der Figur 1 zu entnehmen, dass an dem Fahrweg 8 angrenzend Wechselplätze 10 vorgesehen sind, auf denen jeweils ein Transportfahrzeug 2 für den Wechsel der Batterie 1 abgestellt werden kann. Da die Transportfahrzeuge 2 fahrerlos sind, fahren diese automatisch die Wechselplätze 10 an. Die Wechselplätze 10 grenzen an den Fahrweg 8 an, so dass die Be- und Entladevorrichtung 7 der Verteilfahrzeuge 4a, 4b, die an dem Transportfahrzeug 2 befestigte Batterie 1 erreichen kann. Der erste Wechselplatz 10a ist in Bezug auf den Fahrweg 8 gesehen den Lagerplätzen 5 des Regals 6 gegenüberliegend angeordnet. Das auf dem ersten Wechselplatz 10a ruhende Transportfahrzeug 2 ist hierbei mit seiner Längsrichtung T parallel zu der Längserstreckung R des Regals 6 ausgerichtet. Hieraus ergibt sich zwangsläufig, dass die Schiene 8a des Verteilfahrzeuges 4 auch parallel zu der Längsrichtung T des Transportfahrzeuges 2 und der Längserstreckung R des Regals 6 ausgerichtet ist.

Der zweite Wechselplatz 10b grenzt einerseits an die Stirnseite 6c des Regals 6 an und andererseits an den Fahrweg 8. Auch hier ist die Längsrichtung T des Transportfahrzeugs 2, wenn das Transportfahrzeug 2 auf dem zweiten Wechselplatz 10b ruht, im Wesentlichen parallel zur Längserstreckung R des Regals 6 ausgerichtet. In Bezug auf den zweiten Wechselplatz 10b kann das Verteilfahrzeug 4 derart ausgebildet werden, dass die Be- und Entladevorrichtung 7 nur in eine Richtung ausfahrbar ist, da die Lagerplätze 5 des Regals 6 und der zweite Wechselplatz 10b auf der gleichen Seite des Verteilfahrzeuges 4 liegen.

In Bezug auf den ersten Wechselplatz 10a, der den Lagerplätzen 5 in Bezug auf das Verteilfahrzeug 4 gegenüberliegt, ist die Be- und Entladevorrichtung 7 entsprechender Weise derart ausgebildet, dass sie nach beiden Seiten ein- und ausfahrbar ist, um die Batterien 1 bei dem Wechselvorgang handhaben zu können.

Die Verteilfahrzeuge 4 arbeiten im Automatikbetrieb, genauso wie die fahrerlosen Transportfahrzeuge 2 im Automatikbetrieb arbeiten. Entsprechender Weise ist der ganze Wechselbereich 12, den das System einnimmt, von einer Begrenzung 11 umgeben, die als Zaun oder Mauer ausgebildet sein kann, um das unbefugte Betreten und somit Gefährden von Personen zu verhindern. Um ein Einfahren der Transportfahrzeuge 2 in den von der Begrenzung 11 umgebenen Wechselbereich 12 zu ermöglichen, sind in Verlängerung des ersten Wechselplatzes 10a ein erstes Tor 11 a in der Begrenzung 11, in Verlängerung des zweiten Wechselplatzes 10b ein zweites Tor 11b in der Begrenzung 11 vorgesehen, die jeweils automatisch öffnen und schließen, um somit ein Transportfahrzeug 2 ein- und ausfahren zu lassen. Des Weiteren ist ein drittes Tor 11 c vorgesehen, um für Wartungszwecke oder bei einem Umschalten auf Manuellbetrieb bei Ausfall der Verteilfahrzeuge 4 den Wechselbereich 12 befahren oder betreten zu können. Insbesondere kann durch das dritte Tor 11c der vorbeschriebene Gabelstapler 9 eingefahren werden. Die Wechselplätze 10a, 10b sind über entsprechende erste und zweite Wechselfahrwege 13a, 13b mit dem ersten und zweiten Tor 11 a und 11 b verbunden. Die Wechselfahrwege 13a, 13 b sind ebenfalls geradlinig.

Zusätzlich sind Sensoren im Bereich der Wechselplätze 10a, 10b vorgesehen, um die Position des Transportfahrzeuges 2 relativ zu der Be- und Entladevorrichtung festzustellen. Anhand der ermittelten Position wird dann die Ausrichtung der Be- und Entladevorrichtung entsprechend korrigiert.

Auch kann im Randbereich der Begrenzung 11 eine Art Werkstattbereich 14 vorgesehen werden, der ebenfalls an den Fahrweg 8 des Verteilfahrzeuges 4 angrenzt, in dem Batterien 1 von dem Verteilfahrzeug 4 abgestellt und aufgenommen werden können, um diese dort zu warten, auszutauschen oder zu reparieren.

In der Figur 1 ist eine von vielen möglichen Ausgestaltungen eines Systems zum Wechseln einer Batterie 1 eines Transportfahrzeuges 2 dargestellt. Grundsätzlich ist es auch möglich, neben der einzeiligen Ausgestaltung des Regals 6 auch eine zweizeilige Ausgestaltung mit einem dazwischen liegenden Fahrweg 8 für das Verteilfahrzeug 4 vorzusehen. Dann wären die Wechselplätze 10 jeweils stirnseitig an einem oder beiden Enden der Reihen der Regale 6 vorzusehen. Auch könnte der erste oder zweite Wechselplatz 10a, 10b bei der beschriebenen Ausführung wegfallen. Ebenso könnten bei einer zweizeiligen Ausgestaltung des Regals zwei Fahrwege 8 für zwei Verteilfahrzeuge 4 vorgesehen werden. Dies würde mit einer Verdoppelung des zuvor beschriebenen Systems mit nur dem zweiten Wechselplatz 10b vergleichbar sein. Außerdem wäre es möglich, neben den Wechselfahrwegen 13a, 13b die normalen Fahrspuren für die Transportfahrzeuge 2 im Umschlagbetrieb parallel verlaufen zu lassen, so dass die Transportfahrzeuge 2 für ein Einfahren in die Wechselplätze 10 nach Art eines seitlichen Einparkens einfahren. Bei dieser Ausführungsform wäre dann eine Vielzahl von Wechselplätzen 10 hintereinander entlang des Fahrwegs 8 für das Verteilfahrzeug 4 vorgesehen.

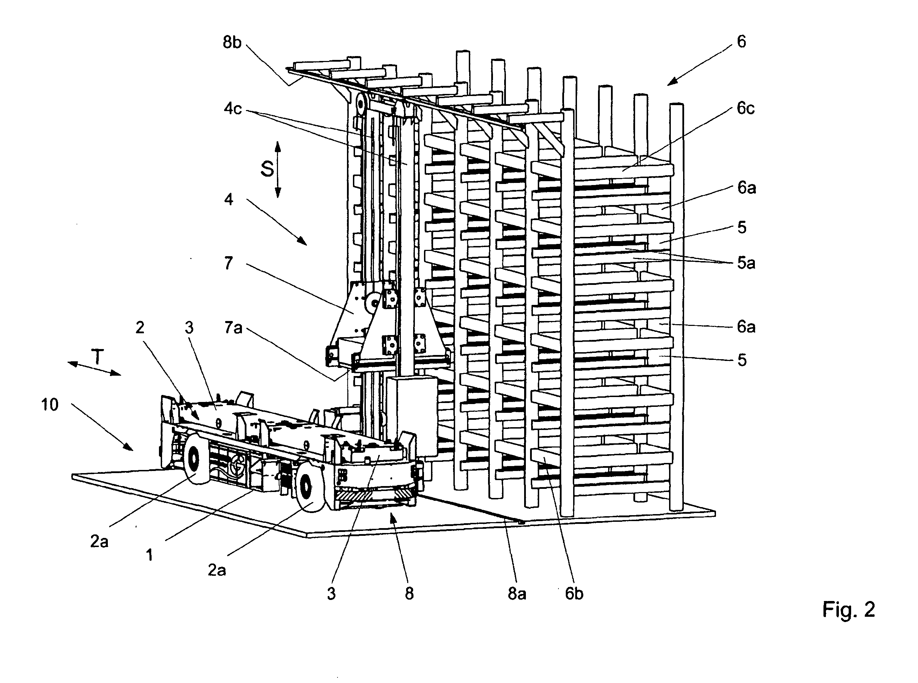

Die Figur 2 zeigt eine perspektivische Ansicht auf ein Regal 6 mit einem Verteilfahrzeug 4 und einem davor in einem Wechselplatz 10 ruhenden Transportfahrzeug 2. Das Regal 6 ist in üblicherweise in Stahlbauweise hergestellt und hat beispielsweise sechs Lagerplätze 5 nebeneinander und ebenfalls sechs Regalebenen 6a übereinander. Somit bietet das Regal 6 Lagerraum für 36 Batterien 1. Die einzelnen Lagerplätze 5 weisen keinen Lagerboden auf, sondern bestehen im Wesentlichen aus zwei seitlichen, voneinander beabstandeten und gegenüber liegenden Tragschienen 5a, die in vertikaler Richtung gesehen leicht oberhalb der Mitte eines jeden Lagerplatzes 5 an dem Stahlbau des Regals 6 befestigt sind. Diese Tragschienen 5a dienen zur Aufnahme der Batterien 1, die entsprechend komplementär ausgebildete Auflageelemente 1 a aufweisen.

Die Batterie 1 ist in der Draufsicht gesehen rechteckig und die Auflageelemente 1 a sind in den Bereichen der Ecken der Längsseiten der Batterie 1 angeordnet und haben jeweils von oben gesehen eine quadratische Form. Im Bereich der Tragschienen 5a sind auch Zentrierelemente vorgesehen, die beim Absenken der Batterie 1 in den jeweiligen Lagerplatz 5 eine Zentrierung der Auflageelemente 1 a in Bezug auf den Lagerplatz beim Absenken der Batterie 1 der Tragschienen 5a bewirken. Somit kann die Batterie 1 relativ positionsgenau in dem Lagerplatz 5 von dem Verteilfahrzeug 4 abgesetzt werden. Die nicht dargestellten Zentrierelemente sind entsprechender Weise in Hub- und Senkrichtung der Batterie 1 gesehen trichterförmig ausgebildet. In bevorzugter Ausgestaltung sind zentral in den Auflageelementen 1a jeweils eines Bohrung vorgesehen und die Zentrierelemente als vertikal ausgerichtete Dorne ausgebildet, die sich ausgehend von der Tragschiene 5a nach oben kegelförmig verjüngen. Außerdem ist so möglich durch die innerhalb des Lagerplatzes 5 erfolgende Absetzbewegung die Batterie 1 durch über außen an der Batterie 1 angeordnete Elemente automatisch elektrisch zu kontaktieren sowie zusätzlich mit einer Versorgungsleitung für eine automatische Zufuhr von gereinigtem Wasser in einer optimalen Menge sowie mit einem Luftanschluss zu verbinden, um die Batterie-Flüssigkeit während des Ladevorgangs umzuwälzen. Außerdem sind die Anschluss- und Kontaktelemente so ausgebildet, dass diese einen zusätzlichen Toleranzausgleich in allen Bewegungsrichtungen bieten. Die Anschluss- und Kontaktelemente sind in dem Regal 6 aus Gründen der Vereinfachung nicht dargestellt. Das Gleiche gilt auch für die gesamte Energieversorgung für den eigentlichen Ladevorgang der Batterie 1.

Entlang der vorderen Längsseite 6b des Regals 6 ist das Verteilfahrzeug 4 entlang seines Fahrweges 8 und der in den Fahrweg 8 eingelassenen Schiene 8a verfahrbar. Das als Regalbediengerät ausgebildete Verteilfahrzeug 4 weist in für die Handhabung von schweren Lasten - wie den hier vorliegenden Batterien 1 - üblicherweise zwei voneinander beabstandete vertikale Maste 4c auf, zwischen denen ein Hubtisch 7a der Be- und Entladevorrichtung 7 entlang der Masten 4c vertikal in Hub- und Senkrichtung S verfahrbar ist. Da das Transportfahrzeug 2 entlang der Schiene 8a sowie der Hubtisch 7a entlang der Masten 4c verfahrbar ist, kann jeder Lagerplatz 5 innerhalb des Regals 6 von dem Verteilfahrzeug 4 angefahren werden.

Des Weiteren ist aus der Figur 2 ersichtlich, dass das Verteilfahrzeug 4 zusätzlich am oberen Ende der beiden Masten 4c in einer oberen Führungsschiene 8b geführt ist, die parallel zu der Schiene 8a in dem Fahrweg 8 verläuft und an dem Regal 6 auskragend befestigt ist. Das Verteilfahrzeug 4 verfügt über elektrische Antriebe.

Auch zeigt die Figur 2 das Transportfahrzeug 2, welches ein Leergewicht von etwa 35 Tonnen aufweist. Hierzu kommt noch das Gewicht des zu transportierenden und nicht dargestellten Containers, sodass im Beladezustand ein Gewicht von etwa 85 Tonnen erreicht wird. Das Transportfahrzeug 2 ist in üblicherweise mit vier Rädern 2a mit Bereifung ausgeführt, die über nicht dargestellte einzelne hydraulische oder elektrische Antriebe angetrieben werden. Es ist ersichtlich, dass die Batterie 1 unterhalb eines Fahrzeugrahmens 2d zwischen den vorderen und den hinteren Rädern 2a des Transportfahrzeuges 2 angeordnet ist. Des Weiteren ist in der Figur 2 gezeigt, dass auf dem Fahrzeugrahmen 2b zwei in Längsrichtung T des Transportfahrzeuges 2 gesehen hintereinander angeordnete Hubplattformen 3 angeordnet sind, auf denen jeweils ein 20-Fuß-Container oder gemeinsam ein 40-Fuß-Container oder ein 45-Fuß-Container abgestellt werden können. Für den Aufnahme- über Übergabevorgang werden dann die Hubplattformen 3 üblicherweise gemeinsam oder einzeln je nach Container angehoben beziehungsweise abgesenkt.

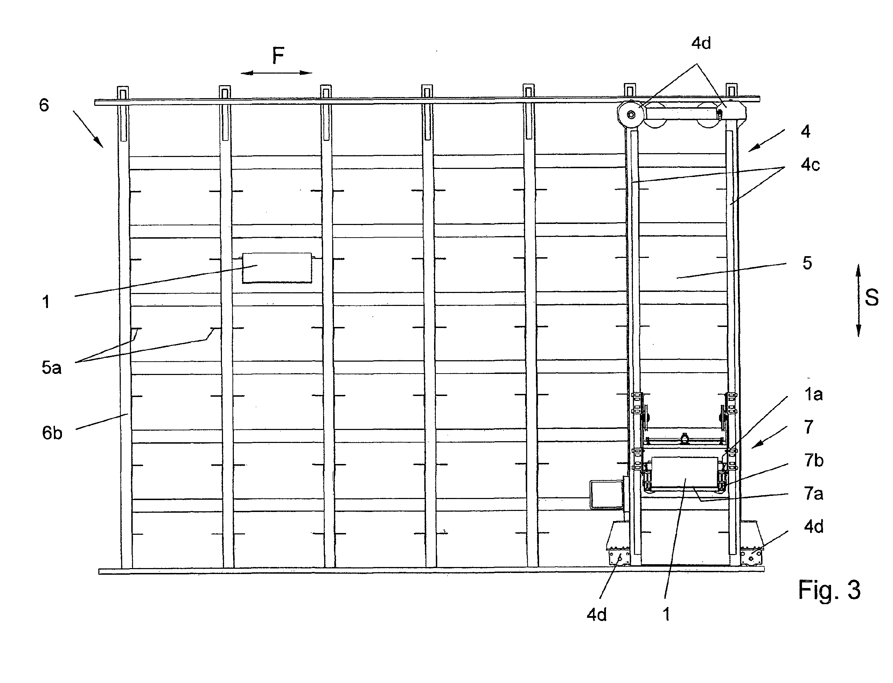

In der Figur 3 ist eine Ansicht auf die vordere Längsseite 6b des Regals 6 gemäß Figur 2 dargestellt. Diese Ansicht zeigt besonders gut die quaderförmige Ausgestaltung der Lagerplätze 5, die in Zeilen und Spalten angeordnet sind, um im Wesentlichen ebenfalls quaderförmig ausgestalteten Batterien 1 für den Ladevorgang und somit eine Art Zwischenlagerung aufzunehmen. Wie zu der Figur 2 beschrieben, sind in jedem Lagerplatz 5 Tragschienen 5a vorgesehen, die im Wesentlichen horizontal verlaufen und sich von den Seiten des Lagerplatzes 5 leicht in Richtung des Inneren des Lagerplatzes 5 erstrecken. Diese Tragschienen 5a bilden eine durchgehende Auflagefläche für die Auflageelemente 1 a der Batterien 1. Die Batterie 1 wird somit innerhalb der Lagerplätze 5 aufgehängt. Diese Art der Befestigung ermöglicht auch das einfache automatische An- und Abkoppeln der Batterien 1 für den Ladevorgang. Innerhalb des Verteilfahrzeuges 4 wird die Batterie nicht an ihren Hängeelementen 1 a aufgehängt sondern liegt mit ihrem Boden 1 b auf dem Hubtisch 7a auf. Damit die Batterie 1 in die Lagerplätze 5 ein- beziehungsweise ausgelagert werden kann und ebenfalls in das Transportfahrzeug 2 ein- beziehungsweise ausgelagert werden kann, ist der Hubtisch 7a in Fahrtrichtung F des Verteilfahrzeuges 4 gesehen hierzu quer in Ein- und Auslagerungsrichtung E über Auflagearme 7b, Zwischenarme 7c und Führungsarme 7d, die ein Vollauszug-Teleskop bilden, seitlich ausfahrbar.

Des Weiteren verfährt das Verteilfahrzeug 4 über Fahrwerke 4d auf der Schiene 8a und wird oben an der Führungsschiene 8b über weitere Fahrwerke 4d geführt.

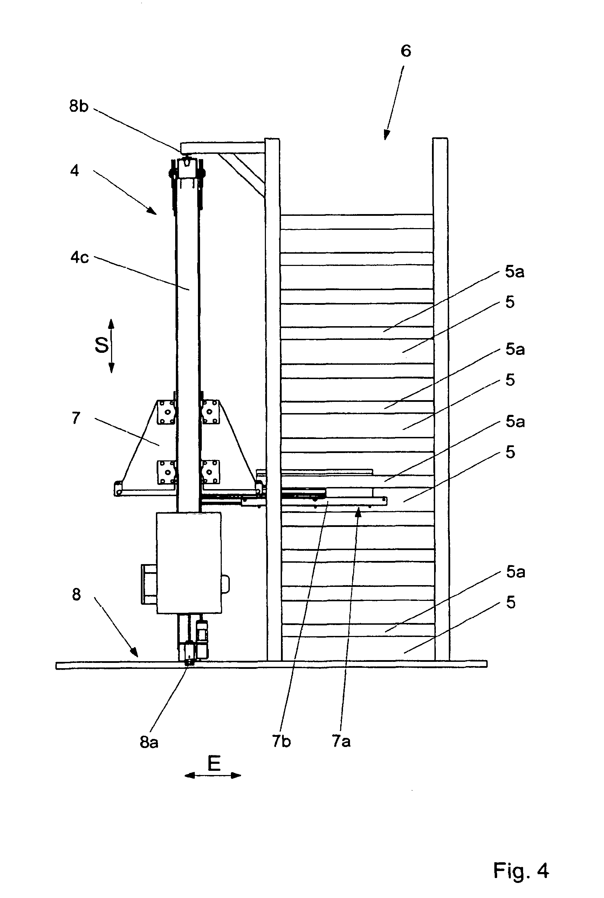

Die Figur 4 zeigt eine Ansicht auf die Stirnseite 6c des Regals gemäß Figur 2. Aus dieser Ansicht ist ersichtlich, dass sich die Tragschienen 5a für die Lagerung der Batterien mit Stahlbauelementen des Regals in Hub- und Senkrichtung S gesehen abwechseln. Das Verteilfahrzeug 4 lagert in der Figur 4 gerade eine Batterie 1 in einen Lagerplatz der von unten gesehen zweiten Regalebene 6a ein. Für den Absetzvorgang innerhalb des Regals sind die die Auflagearme 7b und die Zwischenarme 7c noch etwas weiter auszufahren, so dass sich die Batterie 1 vollständig in dem Lagerplatz 5 befindet und die vorgesehene Position innerhalb des Lagerplatzes 5 erreicht wird, um die automatische Kontaktierung der Batterie 1 für den Ladevorgang zu erreichen. Das Absenken und Anheben innerhalb des Lagerplatzes 5 erfolgt über die vertikale Fahrbewegung der Be- und Entladevorrichtung 7 entlang der Maste 4c des Verteilfahrzeuges 4.

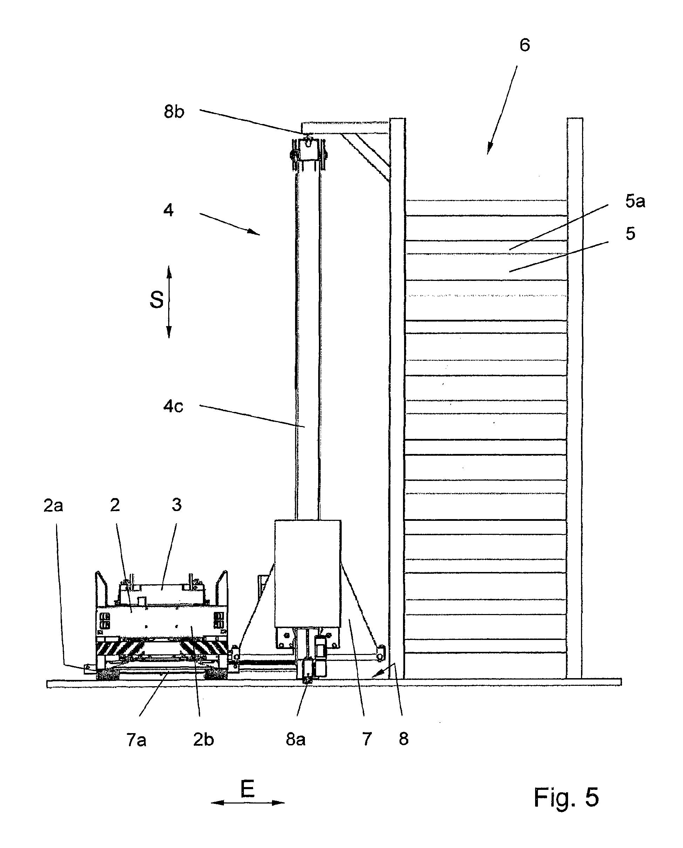

In der Figur 5 ist eine Ansicht entsprechend der Figur 4 dargestellt, jedoch befindet sich die Be- und Entladevorrichtung 7 in einem nahezu vollständig abgesenkten Zustand. Außerdem ist die Be- und Entladevorrichtung 7 beziehungsweise dessen Hubtisch 7a über die Auflagearme 7b, die Zwischenarme 7c und die Führungsarme 7d, die zusammen ein Teleskop bilden, vollständig in Ein- und Auslagerungsrichtung E ausgefahren und befindet sich somit unterhalb der in dem Fahrzeug 2 aufgehängten Batterie 1. Anschließend wird die Be- und Entladevorrichtung 7 in Hub- und Senkrichtung S entlang der Maste 4c angehoben und somit die Batterie 1 aus der Verankerung in dem Transportfahrzeug 2 angehoben. In dem Transportfahrzeug 2 befinden sich Auflageschienen 2c, die im Wesentlichen mit den Tragschienen 5a der Lagerplätze 5 übereinstimmen. Wichtig ist hierbei, dass die elektrische Kontaktierung der Batterie 1 mit dem Transportfahrzeug 2 beziehungsweise deren Trennung voneinander automatisch allein durch die Hub- und Senkbewegung des Verteilfahrzeuges 4 erfolgt. Wenn die Batterie 1 dann auf dem Hubtisch 7a ruht und die Auflageelemente 1 a der Batterie 1 von den Auflageschienen 2c des Transportfahrzeuges 2 getrennt sind, fährt der Hubtisch 7a in Ein- und Auslagerungsrichtung E in Richtung der Be- und Entladevorrichtung 7 soweit, dass die Batterie 1 so gut wie symmetrisch zu den Masten 4c ausgerichtet ist.

Bei einem Sonderfall könnte es dazu kommen, dass der Wechselplatz 10, auf dem das Transportfahrzeug 2 ruht, genau genüberliegend zu einem leeren Lagerplatz 5 angeordnet ist, so dass die Be- und Entladevorrichtung 7 die leere Batterie 1 direkt auf der gegenüberliegenden Seite des Wechselplatzes 10 in Ein- und Auslagerungsrichtung E in den Lagerplatz 5 einfahren kann, dort die Batterie 1 absenkt und hierdurch kontaktiert und anschließend den Lagerplatz 5 verlässt. Üblicherweise wird jedoch das Verteilfahrzeug 4 die Batterie 1 an einen leeren Lagerplatz 5 verfahren, anschließend eine geladene Batterie 1 aufnehmen und dem wartenden Transportfahrzeug 2 ohne Batterie 1 zuführen.

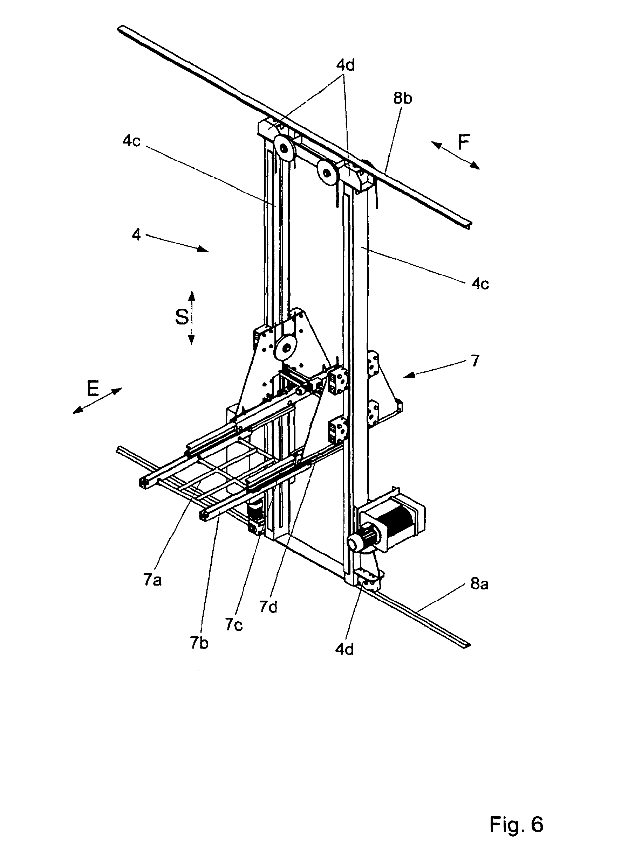

Die Figur 6 zeigt eine perspektivische Ansicht des Verteilfahrzeuges 4. Neben der oberen Führungsschiene 8b und der unteren Schienen 8a ist besonders der Aufbau der Be- und Entladevorrichtung 7 zu erkennen. Die Be- und Entladevorrichtung 7 besteht im Wesentlichen aus dem Hubtisch 7a, der hier gitterartig ausgebildet ist und zur Aufnahme des Bodens 1 b der Batterie 1 dient. Der Hubtisch 7a ist zwischen zwei als Längsträgern ausgebildeten Auflagearmen 7b angeordnet. Diese Auflagearme 7b sind über weitere Zwischenarme 7c an Führungsarmen 7d aufgehängt. Die Führungsarme 7d sind in Bezug auf die Maste 4c feststehend und die Zwischenarme 7c sind in Ein- und Auslagerungsrichtung E entlang der Führungsarme 7d verschiebbar und die Auflagearme 7b wiederum an den Zwischenarmen 7c. Der Hubtisch 7a kann somit teleskopartig vollständig aus der Kontur des Verteilfahrzeuges 4 in Ein- und Auslagerungsrichtung E seitlich nach links oder auch nach rechts herausgefahren werden. Die gewünschte Ein- und Auslagerung der Batterien 1 in die Lagerplätze 5 beziehungsweise die Ein- und Auslagerung der Batterien 1 in das Transportfahrzeug 2 ist somit möglich.

Des Weiteren ist die Be- und Entladevorrichtung 7 derart ausgebildet ist, dass die Batterie 1 zum Erleichtern des Zentrierens während der Senkbewegung der Be- und Entladevorrichtung 7 und bei im Eingriff befindlichen Zentrierelementen horizontal bewegbar ist. Dies kann in konstruktiver Ausgestaltung dadurch erreicht werden, dass auf dem Hubtisch 7a ein Rollentisch angeordnet ist, der bei zumindest anfänglich im Eingriff befindlichen Zentrierelementen freigeschaltet wird, und somit die gewünschte horizontale Ausgleichbewegung der Batterie 1 während des Zentriervorganges ermöglicht, obwohl die Batterie ein so hohes Gesamtgewicht hat. Alternativ können auch die horizontalen Bewegungsachsen der Be- und Entladevorrichtung 7 kraftlos geschaltet werden.

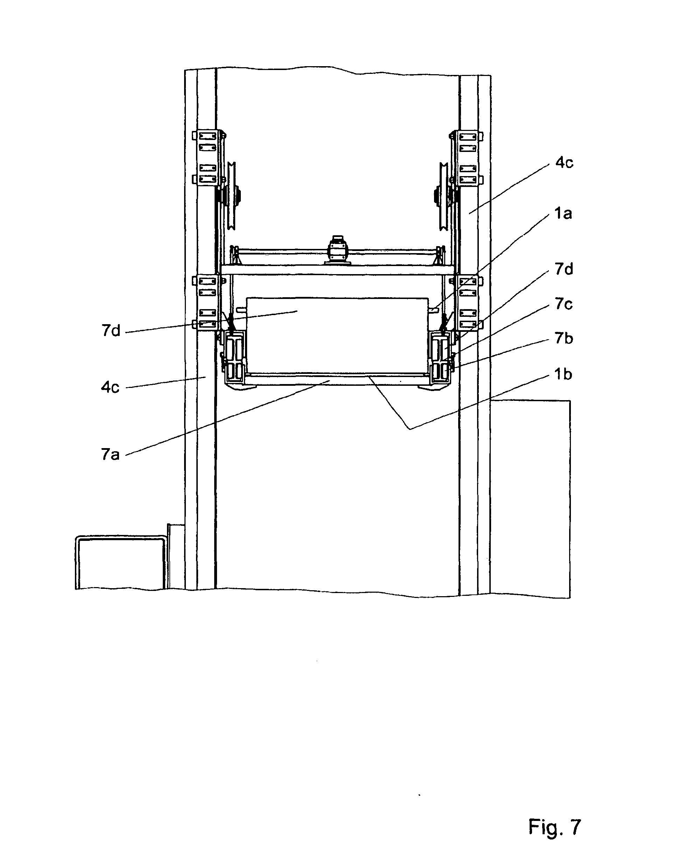

In der Figur 7 wird eine vergrößerte Ansicht aus dem Bereich der Be- und Entladevorrichtung 7 gezeigt. Neben dem zuvor beschriebenen Hubtisch 7a sind auch die Auflagearme 7b zu erkennen, die direkt mit dem Hubtisch 7a verbunden sind. Die Zwischenarme 7c und die Führungsarme 7d, die zusammen mit den Auflagearmen 7b eine Art eine Vollauszug-Teleskop bilden, sind in Hub- und Senkrichtung S gesehen über den Auflagearmen 7b angeordnet.

Außerdem sind in Bezug auf die Batterie 1 besonders deutlich die seitlich auskragenden konsolenartigen Aufhängeelemente 1 a ersichtlich.

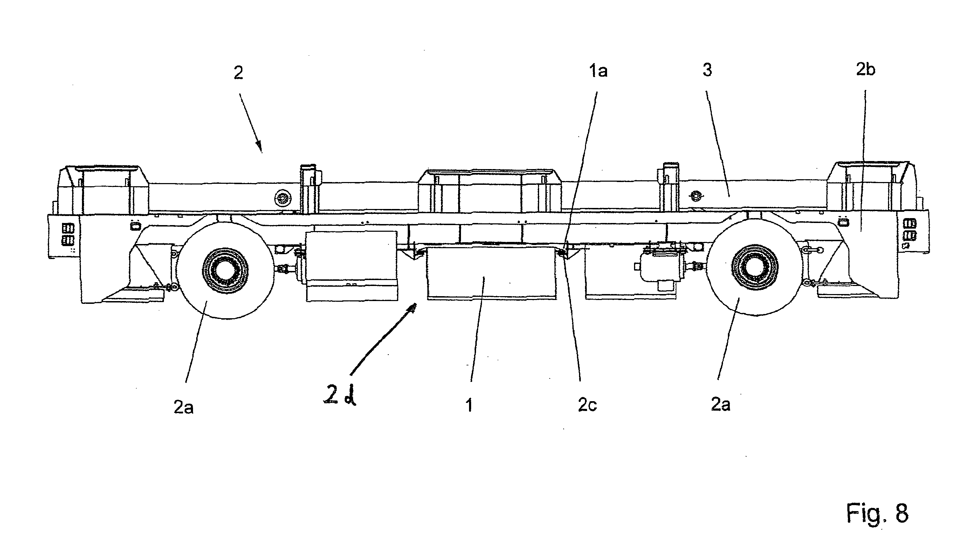

Die Figur 8 zeigt eine schematische Seitenansicht eines Transportfahrzeuges 2. Hieraus ist besonders gut ersichtlich, dass die Batterie 1 zwischen den vorderen und den hinteren Rädern 2a in einem Aufnahmeplatz 2d angeordnet ist und über Auflageschienen 2c an dem Fahrzeugrahmen 2b des Transportfahrzeuges 2 aufgehängt ist. Die beiden Auflageschienen 2c sind mit Abstand zueinander, horizontal ausgerichtet und auf einer Höhe an dem Fahrzeugrahmen 2b befestigt. Um diese Aufhängung zu ermöglichen, hat die Batterie 1 wie zuvor beschrieben seitlich auskragenden Aufhängeelemente 1 a die im Betriebszustand der Batterie 1 auf den Auflageschienen 2c des Transportfahrzeuges 2 aufliegen. Durch diese Art der Aufhängung der Batterie 1 innerhalb des Fahrzeugrahmens 2b und in deren oberen Bereich kann die Batterie 1 einfach von einem Gabelstapler oder von dem Hubtisch 7a der Be- und Entladevorrichtung 7 unterfahren werden, zur automatischen Entriegelung und Entkontaktierung von dem Transportfahrzeug 2 in Hub- und Senkrichtung S angehoben werden und anschließend in Ein- und Auslagerungsrichtung E aus dem Transportfahrzeug 2 heraus bewegt werden.

Im Bereich der Auflageschienen 2c sind wie bei den Tragschienen 5a auch Zentrierelemente vorgesehen, die beim Absenken der Batterie 1 in den jeweiligen Aufnahmeplatz 2d eine Zentrierung der Auflageelemente 1a in Bezug auf den Aufnahmeplatz 2d bewirken. Somit kann die Batterie 1 relativ positionsgenau in dem Lagerplatz 5 von dem Verteilfahrzeug 4 abgesetzt werden. Die nicht dargestellten Zentrierelemente sind entsprechender Weise in Hub- und Senkrichtung der Batterie 1 gesehen trichterförmig ausgebildet. In bevorzugter Ausgestaltung sind zentral in den Auflageelementen 1a jeweils eines Bohrung vorgesehen und die Zentrierelemente als vertikal ausgerichtete Dorne ausgebildet, die sich ausgehend von der Auflageschiene 2c nach oben kegelförmig verjüngen.

Als Einsatzgebiete der vorbeschriebenen Transportfahrzeuge und der zugehörigen Batteriewechselsysteme sind der Umschlag von ISO-Containern im Hafenbereich und im intermodalen Verkehr zwischen Straße und Schiene vorgesehen.

Die vorliegende Erfindung ist an Hand eines flurgebundenen Transportfahrzeuges für den Transport von Containern beschrieben worden. Grundsätzlich ist es möglich, auch andere schweren Lasten wie beispielsweise Brammen oder Coils in der Hütten-, Stahl- und Walzwerkstechnik zu transportieren.

### Bezugszeichenliste

- 1: Batterie
- 1a: Auflageelemente
- 1b: Boden
- 2: Transportfahrzeug
- 2a: Räder
- 2b: Fahrzeugrahmen
- 2c: Auflageschiene
- 2d: Aufnahmeplatz
- 3: Hubplattform
- 4: Verteilfahrzeug
- 4a: erstes Verteilfahrzeug
- 4b: zweites Verteilfahrzeug
- 4c: Mast
- 4d: Fahrwerk
- 5: Lagerplätze
- 5a: Tragschienen
- 6: Regal
- 6a: Regalebene
- 6b: Längsseite
- 6c: Stirnseite
- 7: Be- und Entladevorrichtung
- 7a: Hubtisch
- 7b: Auflagearme
- 7c: Zwischenarme
- 7d: Führungsarme
- 8: Fahrweg
- 8a: Schiene
- 8b: Führungsschienen
- 9: Gabelstapler
- 10: Wechselplatz
- 10a: erster Wechselplatz
- 10b: zweiter Wechselplatz
- 11: Begrenzung
- 11a: erstes Tor
- 11b: zweites Tor
- 11c: drittes Tor
- 12: Wechselbereich
- 13a: erster Wechselfahrweg
- 13b: zweiter Wechselfahrweg
- 14: Werkstattbereich

- E: Ein- und Auslagerungsrichtung
- F: Fahrtrichtung
- S: Hub- und Senkrichtung
- T: Längsrichtung
- R: Längserstreckung

## Patentansprüche

1. System zum Wechseln einer Batterie eines flurgebundenen Transportfahrzeuges (1) mit Lagerplätzen (5) für Batterien (1), mit mindestens einem flurgebundenen Transportfahrzeug (2) mit einem Aufnahmeplatz (2d) für eine auswechselbare Batterie (1) und mit mindestens einer Be- und Entladevorrichtung (7) zum Transport der Batterien (1) zwischen den Lagerplätzen (5) und dem Aufnahmeplatz (2d) eines auf einem Wechselplatz (10) ruhenden Transportfahrzeuges (2), wobei die Batterie (1) für ein Ein- und Auslagern der Batterie (1) in den Lagerplätzen (5) beziehungsweise in den Aufnahmeplätzen (2d) in Hub- und Senkrichtung (S) bewegbar ist, **dadurch gekennzeichnet, dass** das Transportfahrzeug (1) ein fahrerloses Schwerlast-Transportfahrzeug (1) für ISO-Container ist, die Batterie (1) als Bleibatterie ausgebildet ist und ein Gewicht von mindestens 6t, vorzugsweise 8 t bis 9 t, hat, dem Lagerplatz (5) beziehungsweise dem Aufnahmeplatz (2d) derart Zentrierelemente zugeordnet sind, dass die Batterie (1) in Antwort auf die Senkbewegung der Be- und Entladevorrichtung (7) über die Zentrierelemente relativ zu dem Lagerplatz (5) beziehungsweise dem Aufnahmeplatz (2d) ausgerichtet wird.

2. System nach Anspruch 1, **dadurch gekennzeichnet, dass** die Batterie (1) derart ausgebildet ist, dass diese von der Be- und Entladevorrichtung (7) in den Lagerplatz (5) beziehungsweise den Aufnahmeplatz (2d) auf- und abhängbar sind.

3. System nach Anspruch 2, **dadurch gekennzeichnet, dass** an der Batterie (1) seitlich zu beiden Seiten hervor ragende Auflageelemente (1a) und in dem Lagerplatz (5) Tragschienen (5a) und dem Aufnahmeplatz (2d) Auflageschienen (2c) angeordnet sind, auf den die Auflageelemente (1 a) einer in dem Lagerplatz (5) beziehungsweise den Aufnahmeplatz (2d) ruhenden Batterie (1) aufliegen.

4. System nach Anspruch 1, **dadurch gekennzeichnet, dass** die Be- und Entladevorrichtung (7) derart ausgebildet ist, dass die Batterie (1) zum Erleichtern des Zentrierens während der Senkbewegung der Be- und Entladevorrichtung (7) und bei im Eingriff befindlichen Zentrierelementen horizontal bewegbar ist.

5. System nach Anspruch 1 oder 4, **dadurch gekennzeichnet, dass** über die Bewegung der Batterie (1) in Hub- und Senkrichtung (S) die Batterie (1) in den Lagerplätzen (5) und den Aufnahmeplätzen (2d) automatisch elektrisch trennbar beziehungsweise elektrisch kontaktierbar ist.

6. System nach einem der Ansprüche 1 bis 5, **dadurch gekennzeichnet, dass** die Be- und Entladevorrichtung (7) einen Auflagearm (7b) für die Batterie (1) aufweist, der in Richtung des Fahrwegs (8) des Verteilfahrzeuges (4) gesehen seitlich in eine Ein- und Auslagerungsrichtung (E) der Lagerplätze (5) und in Richtung eines Wechselplatzes (10) aus- beziehungsweise einfahrbar ist.

7. System nach einem der Ansprüche 1 bis 6, **dadurch gekennzeichnet, dass** die Batterie (1) als Bleibatterie ausgebildet ist und in den Lagerplätzen (5) eine Ladevorrichtung vorgesehen ist, die während des Ladevorganges die Batterie (1) mit der optimalen Menge gereinigten Wassers versorgt.

8. System nach einem der Ansprüche 1 bis 7, **dadurch gekennzeichnet, dass** das Verteilfahrzeug (2) im Automatikbetrieb arbeitet.

9. System nach einem der Ansprüche 1 bis 8, **dadurch gekennzeichnet, dass** eine Vielzahl von Lagerplätzen (5) nebeneinander angeordnet sind, die Be- und Entladevorrichtung (7) an einem Verteilfahrzeug (4) angeordnet ist, das entlang der Lagerplätze (5) und entlang eines Fahrweges (8) verfahrbar ist und an den Fahrweg (8) angrenzend mindestens ein Wechselplatz (10) für das Transportfahrzeug (2) angeordnet ist.

10. System nach einem der Ansprüche 1 bis 9, **dadurch gekennzeichnet, dass** der mindestens eine Wechselplatz (10) in Bezug auf den Fahrweg (8) den Lagerplätzen (5) gegenüberliegend angeordnet ist.

11. System nach einem der Ansprüche 1 bis 10, **dadurch gekennzeichnet, dass** der mindestens ein Wechselplatz (10) angrenzend an den Fahrweg (8) und in Verlängerung der Lagerplätze (5) angeordnet ist.

12. System nach Anspruch 9 oder 11, **dadurch gekennzeichnet, dass** mehr als ein Wechselplatz (10) vorgesehen ist, die in Bezug auf den Fahrweg (8) den Lagerplätzen (5) gegenüberliegend angeordnet und/oder angrenzend an den Fahrweg (8) und in Verlängerung der Lagerplätze (5) angeordnet sind.

13. System nach einem der Ansprüche 1 bis 12, **dadurch gekennzeichnet, dass** die Lagerplätze (5) in einem Regal (6) mit mehreren übereinander angeordneten Ebenen (6a) ausgebildet sind und das Verteilfahrzeug (4) als Regalbediengerät ausgebildet ist.

14. System nach einem der Ansprüche 1 bis 13, **dadurch gekennzeichnet, dass** im Bereich der Wechselplätze (10a, 10b) Sensoren angeordnet sind, mit denen die Position des Transportfahrzeuges (2) relativ zu der Be- und Entladevorrichtung (7) feststellbar ist, und die Ausrichtung der Be- und Entladevorrichtung (7) zu dem Transportfahrzeug (2) auf dem Wechselplatz (10a, 10b) anhand der ermittelten Position des Transportfahrzeuges (2) korrigierbar ist.

## Claims

1. System for changing a battery of a ground transportation vehicle (1), having storage locations (5) for batteries (1), having at least one ground transportation vehicle (2) which has a receiving location (2d) for an exchangeable battery (1) and having at least one loading and unloading arrangement (7) for transporting the batteries (1) between the storage locations (5) and the receiving location (2d) of a transportation vehicle (2) stationary at an exchange station (10), the battery (1) being able to be moved in a raising and lowering direction (S) for the placing of the battery (1) in, and the withdrawal thereof from, the storage locations (5) or receiving locations (2d), **characterised in that** the transportation vehicle (1) is an unmanned heavy-duty transportation vehicle (1) for ISO containers, the battery (1) takes the form of a lead-acid battery and weighs at least 6 t and preferably 8 t to 9 t, the storage location (5) and receiving location (2d) have respective locating members associated with them in such a way that, in response to the lowering movement of the loading and unloading arrangement (7), the battery (1) is lined up, relative to the storage location (5) or receiving location (2d), by means of the respective locating members.

2. System according to claim 1, **characterised in that** the battery (1) is so designed that it can be hung into and unhung from the storage location (5) or receiving location (2d) by the loading and unloading arrangement (7).

3. System according to claim 2, **characterised in that** supported members (1a) which project laterally on both sides are arranged on the battery (1), and carrier rails (5a) are arranged in the storage location (5) and supporting rails (2c) in the receiving location (2d), on which the supported members (1a) of a battery (1) held respectively in the storage location (5) or receiving location (2d) rest.

4. System according to claim 1, **characterised in that** the loading and unloading arrangement (7) is so designed that, to facilitate the locating process, the battery (1) can be moved horizontally during the lowering movement of the loading and unloading arrangement (7) and when the locating members are engaged.

5. System according to claim 1 or 4, **characterised in that** the battery (1) can be automatically connected or disconnected electrically in the storage locations (5) and receiving locations (2d) by means of the movement of the said battery (1) in the raising and lowering direction (S).

6. System according to one of claims 1 to 5, **characterised in that** the loading and unloading arrangement (7) has a supporting arm (7b) for the battery (1) which, looking in the direction defined by the path of travel (8) of the distributing vehicle (4), can be extended and retracted laterally in a direction (E) of storage in and withdrawal from the storage locations (5) and in the direction of an exchange station (10).

7. System according to one of claims 1 to 6, **characterised in that** the battery (1) takes the form of a lead-acid battery and there is provided in the storage locations (5) a charging device which supplies the battery (1) with the optimum amount of purified water during the charging process.

8. System according to one of claims 1 to 7, **characterised in that** the distributing vehicle (2) operates in an automatic mode.

9. System according to one of claims 1 to 8, **characterised in that** a plurality of storage locations (5) are arranged next to one another, the loading and unloading arrangement (7) is arranged on a distributing vehicle (4) which is displaceable along the storage locations (5) and along a path of travel (8), and at least one exchange station (10) for the transportation vehicle (2) is arranged adjacent the path of travel (8).

10. System according to one of claims 1 to 9, **characterised in that** the at least one exchange station (10) is arranged opposite the storage locations (5) relative to the path of travel (8).

11. System according to one of claims 1 to 10, **characterised in that** the at least one exchange station (10) is arranged adjacent the path of travel (8) and as an extension of the storage locations (5).

12. System according to claim 9 or 11, **characterised in that** more than one exchange station (10) is provided, which exchange stations (10) are arranged opposite the storage locations (5) relative to the path of travel (8) and/or adjacent the path of travel (8) and as an extension of the storage locations (5).

13. System according to one of claims 1 to 12, **characterised in that** the storage locations (5) are formed in racking (6) having a plurality of levels (6a) arranged one above the other and the distributing vehicle (4) takes the form of a rack-serving unit.

14. System according to one of claims 1 to 13, **characterised in that** there are arranged in the region of the exchange stations (10a, 10b) sensors with which the position of the transportation vehicle (2) relative to the loading and unloading arrangement (7) can be established, and the alignment of the loading and unloading arrangement (7) with the transportation vehicle (2) at the exchange station (10a, 10b) can be corrected by reference to the position established for the transportation vehicle (2).

## Revendications

1. Système de remplacement d'une batterie d'un véhicule de transport au sol (1), ledit système comportant des emplacements de stockage (5) destinés aux batteries (1), au moins un véhicule de transport au sol (2) équipé d'un logement (2d) destiné à une batterie remplaçable (1) et au moins un dispositif de chargement et déchargement (7) servant à transporter les batteries (1) entre les emplacements de stockage (5) et le logement (2d) d'un véhicule de transport (2) immobile sur un site de remplacement (10), la batterie (1) étant déplaçable dans une direction de levage et d'abaissement (S) afin de stocker et déstocker la batterie (1) dans les emplacements de stockage (5) ou les logements (2d), **caractérisé en ce que** le véhicule de transport (1) est un véhicule de transport de charges lourdes (1) sans conducteur pour conteneurs ISO, la batterie (1) est configurée en batterie au plomb et a un poids d'au moins 6 t, de préférence de 8 t à 9 t, des éléments de centrage sont associés à l'emplacement de stockage (5) ou au logement (2d) de sorte que la batterie (1) est orientée par rapport à l'emplacement de stockage (5) et le logement (2d) via les éléments de centrage en réponse au mouvement d'abaissement du dispositif de chargement et déchargement (7).

2. Système selon la revendication 1, **caractérisé en ce que** la batterie (1) est configurée de telle sorte que le dispositif de chargement et déchargement (7) peut s'accrocher à la batterie ou se décrocher de celle-ci dans l'emplacement de stockage (5) ou le logement (2d).

3. Système selon la revendication 2, **caractérisé en ce que** des éléments d'appui (1a) saillant latéralement des deux côtés sont disposés au niveau de la batterie (1) et des rails de support (5a) sont disposés dans l'emplacement de stockage (5) et des rails d'appui (2c) sont disposés dans le logement (2d), rails sur lesquels reposent les éléments d'appui (1 a) d'une batterie (1) immobile dans l'emplacement de stockage (5) ou le logement (2d).

4. Système selon la revendication 1, **caractérisé en ce que** le dispositif de chargement et déchargement (7) est configuré de telle sorte que la batterie (1) est apte à se déplacer horizontalement afin de faciliter le centrage lors du mouvement d'abaissement du dispositif de chargement et déchargement (7) et une fois les éléments de centrage engagés.

5. Système selon la revendication 1 ou 4, **caractérisé en ce que** le déplacement de la batterie (1) dans la direction de levage et d'abaissement (S) entraîne automatiquement la mise en contact électrique ou hors contact électrique de la batterie (1) dans les emplacements de stockage (5) et les logements (2d).

6. Système selon l'une des revendications 1 à 5, **caractérisé en ce que** le dispositif de chargement et déchargement (7) comporte un bras d'appui (7b) qui est destiné à la batterie (1) et qui peut être déployé ou rétracté latéralement dans une direction de stockage et déstockage (E) dans les emplacements de stockage (5) et en direction d'un site de remplacement (10), lorsque l'on regarde en direction de la voie de roulement (8) du véhicule de distribution (4).

7. Système selon l'une des revendications 1 à 6, **caractérisé en ce que** la batterie (1) est configurée en batterie au plomb et **en ce qu'**il est prévu dans les emplacements de stockage (5) un dispositif de charge qui alimente la batterie (1) avec la quantité optimale d'eau pure durant le processus de charge.

8. Système selon l'une des revendications 1 à 7, **caractérisé en ce que** le véhicule de distribution (2) fonctionne en mode automatique.

9. Système selon l'une des revendications 1 à 8, **caractérisé en ce qu'**une pluralité d'emplacements de stockage (5) sont disposés côte à côte, le dispositif de chargement et déchargement (7) est disposé au niveau d'un véhicule de distribution (4) qui est déplaçable le long des emplacements de stockage (5) et sur une voie de roulement (8) et **en ce qu'**au moins un site de remplacement (10) destiné au véhicule de transport (2) est disposé de façon adjacente à la voie de roulement (16).

10. Système selon l'une des revendications 1 à 9, **caractérisé en ce que** l'au moins un site de remplacement (10) est disposé en face des emplacements de stockage (5) par rapport à la voie de roulement (8).

11. Système selon l'une des revendications 1 à 10, **caractérisé en ce que** l'au moins un site de remplacement (10) est disposé de façon adjacente à la voie de roulement (8) et dans le prolongement des emplacements de stockage (5).

12. Système selon la revendication 9 ou 11, **caractérisé en ce qu'**il est prévu plus d'un site de remplacement (10) qui sont disposés en face des emplacements de stockage (5) par rapport à la voie de roulement (8) et/ou de façon adjacente à la voie de roulement (8) et dans le prolongement des emplacements de stockage (5).

13. Système selon l'une des revendications 1 à 12, **caractérisé en ce que** les emplacements de stockage (5) sont configurés en rayonnage (6) comportant une pluralité de plans superposés (6a) et le véhicule de distribution (4) est configuré en gerbeur.

14. Système selon l'une des revendications 1 à 13, **caractérisé en ce que** au niveau des sites de remplacement (10a, 10b) sont disposés des capteurs qui permettent de déterminer la position du véhicule de transport (2) par rapport au dispositif de chargement et déchargement (7) et de corriger l'orientation du dispositif de chargement et déchargement (7) par rapport au véhicule de transport (2) sur le site de remplacement (10a, 10b) en se fondant sur la position déterminée du véhicule de transport (2).
